# EUROPEAN PATENT APPLICATION

(11) **EP 2 725 654 A1**
(43) Date of publication of application: **30.04.2014**
(21) Application number: 13189853.8
(22) Date of filing: 23.10.2013
(51) Int. Cl.: H01Q 1/24, H01Q 7/00, H04B 5/00

(54) **NFC antenna for portable device**

(30) Priority: 23.10.2012 KR 20120117991
(71) Applicant: Samsung Electronics Co., Ltd, Gyeonggi-do 443-742 (KR)
(72) Inventor: Jung, Younghwan, 443-742 Gyeonggi-do (KR)
(74) Representative: Jenkins, Richard Gavin

(57) **Abstract**

A near field communication (NFC) antenna apparatus with improved operation range, and a portable device having the same are provided. The NFC antenna apparatus includes a first NFC antenna proximate a front surface of the portable device, such as within a black mark area of a front side. A second NFC antenna is proximate a rear surface of the device, such as between a rear case and a PCB. In an exemplary embodiment, the second NFC antenna comprises an outer edge loop, and an inner loop to boost magnetic field strength in a weak radio area generated by the outer edge loop.

## Description

### BACKGROUND

### Technical Field

The present disclosure relates to a near field communication (NFC) antenna apparatus and a portable device having the same, and more particularly, to an NFC antenna apparatus with an improved operation range.

### Description of the Related Art

Due to rapid technological development in recent years, portable electronic devices provide various functions and are now very widely used. Herein, "portable electronic device" is used to refer to any handheld electronic device capable of wirelessly receiving and/or transmitting an information or communication signal, and may also be called herein a portable device, a portable terminal, a mobile device, a mobile terminal, an electronic device, or just a device. Examples of modern portable devices include cell phones, smart phones and tablet PCs, which of course provide various functions in addition to an audio dedicated communication. For example, a typical portable device provides various functions such as a music reproduction function (e.g., MPEG audio layer-3 (MP3), picture or moving picture photographing function, and data communication function. Particularly, recent portable devices provide a near field communication (NFC) function by which information is transferred with another device that is touched with or placed in close proximity to the portable device, e.g., up to about 10cm between the two devices.

In order to provide the NFC function, the portable device includes an NFC antenna (hereinafter, a loop antenna) of a loop form for magnetic coupling of information. A typical loop antenna has a size of about 40mm x 30mm and has a plurality of turns (loops), i.e., a "turn number" of two or more. A loop antenna of this size is generally used for a small mobile terminal having a relatively small length of 5 inches or less.

The NFC antenna is generally installed at a rear surface (e.g., a battery cover or a rear case) of a mobile terminal. Thereby, a conventional mobile terminal is designed to magnetically couple energy to another device proximate the rear surface, rather than the front surface, of the mobile terminal. A problem may arise, however, when a user contacts the mobile terminal with an external reader using the front surface of the mobile terminal. This often results in erroneous signal recognition, because the magnetic field at the front surface of the mobile terminal is not ideal for such information transfer (due to interference by internal circuit components interposed between the loop antenna located at the rear, and the front side). Thereby, user convenience is deteriorated.

Nowadays, larger mobile terminals such as tablet PCs having a large screen of 5 inches or more are commonplace. If the conventional small loop antenna used in typical smartphones is deployed in the large screen mobile terminal, sufficient magnetic field coupled by the small antenna is only provided over a portion of the larger mobile terminal. Consequently, near field communication is only reliable if the user contacts or nearly contacts an external reader device using the specific portion of the mobile terminal (e.g., top or bottom) where the loop antenna is mounted. Hence the user needs to inconveniently pay strict attention to device positioning during the NFC communication operation. One way to alleviate such inconvenience is to increase the size of the loop antenna. However, when the size of the loop antenna increases, the magnetic field produced thereby is weak at a specific area (e.g., an offset central area of the loop) at which the user might attempt to position the mobile terminal adjacent to the reader device. In this circumstance, a weak radio area exists at the placement point, leading to data communication errors caused by poor antenna performance.

### SUMMARY

In an exemplary embodiment, the present disclosure provides an NFC antenna apparatus and a portable device incorporating the same that can increase an NFC recognition area (operation range) of the portable device by installing an NFC antenna proximate both a front surface and a rear surface of the portable device.

The present disclosure further provides an NFC antenna apparatus and a portable device having the same that can increase recognition efficiency by improving the magnetic field in a weak radio area (e.g. shadow area, shadow zone, dead zone) generated by a large loop antenna of a portable device.

In accordance with an aspect of the present disclosure, a portable device includes a first NFC antenna proximate a front surface of the portable device; and a second NFC antenna proximate a rear surface of the portable device.

The first NFC antenna may be mounted just beneath a black mark area of a front side window of the portable device. The second NFC antenna may be mounted between a rear case of the portable device and a printed circuit board (PCB) in which a plurality of electronic components are mounted.

The second NFC antenna may be comprised of at least one inside loop that passes through an outer edge loop and a weak radio area generated by the outer edge loop. In this embodiment, the inside loop increases the magnetic field strength of the weak radio area. Thereby, user convenience is improved as NFC data communication with an external device is more reliable when the portable device is positioned with the former weak radio area in proximity to a receiving area of the external device.

In one exemplary embodiment, a portable device has a single near field communication (NFC) antenna proximate a rear surface of the portable device. The NFC antenna includes at least one outer loop and at least one inside loop that passes through the outer loop and a weak radio area generated by the outer loop.

### BRIEF DESCRIPTION OF THE DRAWINGS

The aspects, features and advantages of the present invention will be more apparent from the following detailed description in conjunction with the accompanying drawings, in which:
FIG. 1A is a plan view of an example front side external appearance of a portable device, illustrating a first NFC antenna thereof according to an exemplary embodiment;
FIG. 1B illustrates a layout of a second NFC antenna on an interior side of a rear case of the portable device of FIG. 1A according to an embodiment;
FIG. 2 illustrates an example arrangement of an NFC antenna apparatus installed in the portable device of FIGS. 1A and 1 B;
FIG. 3 is a cross-sectional view illustrating a mounting example of the second NFC antenna installed in the portable device of FIGS. 1A and 1 B;
FIG. 4A is a table illustrating a near field measurement result of a conventional NFC antenna that does not include an inside loop;
FIG. 4B is a table illustrating a near field measurement result of an NFC antenna having an outer edge loop and an inside loop in accordance with an embodiment, showing improvement in a weak radio area.

### DETAILED DESCRIPTION

Hereinafter, exemplary embodiments of the present invention are described in detail with reference to the accompanying drawings. The same reference numbers are used throughout the drawings to refer to the same or like parts. The views in the drawings are schematic views only, and are not intended to be to scale or correctly proportioned. Detailed descriptions of well-known functions and structures incorporated herein may be omitted to avoid obscuring the subject matter of the present invention.

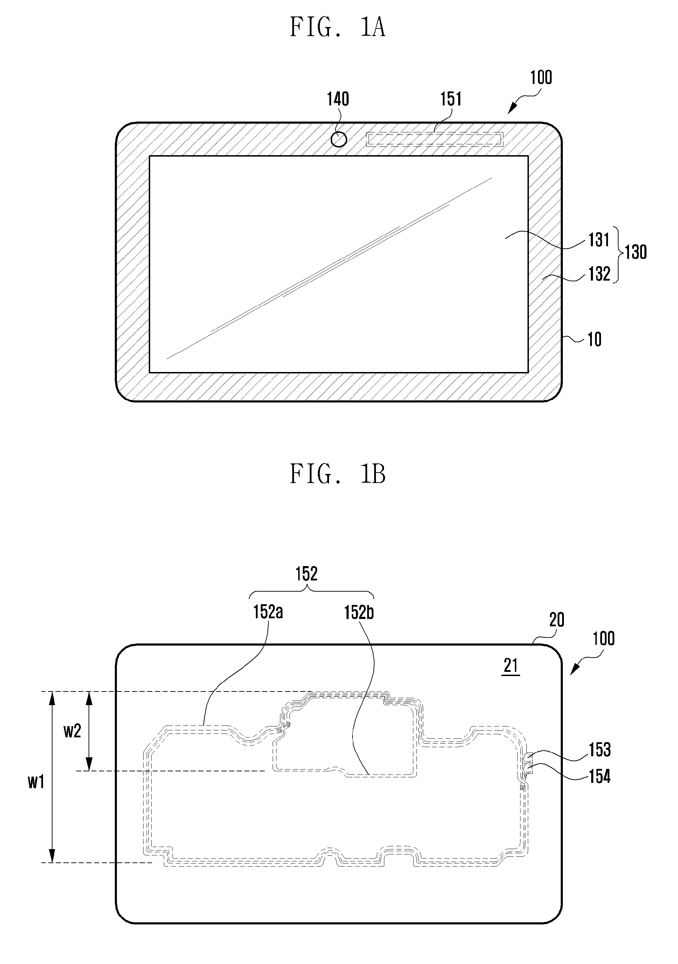

FIG. 1A is a plan view illustrating an example external appearance of a portable device including an NFC antenna apparatus according to an exemplary embodiment of the present invention. Portable device 100 can be any hand-held electronic device capable of communicating an information or communication signal, such as a smart phone or a tablet PC.

Portable device 100 according to the present exemplary embodiment has a quadrangular form and includes a front case 10 at a front side thereof, where a protective window 130 and a camera lens 140 are positioned. (Only an outer peripheral edge of the front case 10 is shown in FIG. 1A; the window 130 is mountable to a peripheral surface of the front case 10.) The exterior surface of the protective window 130 is a front surface of portable device 100. The protective window 130 protects a display device (not shown) for displaying an image, and is made of a transparent material such as glass or transparent acryl. The protective window 130 is disposed at a front surface of the display device. Here, the display device may be formed with a liquid crystal display (LCD) or an organic light emitting diode (OLED). The display device may be provided in a form of a touch screen including a touch panel (not shown) for detecting a touch input.

The protective window 130 is divided into a transparent area 131 through which light of an image is emitted, and a black mark (BM) area 132 (shaded area) formed at a periphery of the transparent area 131. The BM area 132 prevents the inside of portable device 100 from being visible to a user, and is an area for preventing light leakage. BM area 132 is formable by attaching a black tape (not shown) at a rear surface of the protective window 130 or by printing, coating, or depositing black paint (not shown). The BM area 132 is generally formed with a black color; however, other colors can be used, such as white, where the color may be selected to correspond to a case color of portable device 100.

Particularly, in portable device 100 according to the present exemplary embodiment, a first NFC antenna 151 is mounted proximate the portable device 100's front surface, e.g., between the peripheral area of the front case 10 and the BM area 132 of the window 130.

As shown in FIG. 1B, an example layout is shown of a second NFC antenna 152 on an interior surface 21 of a rear case 20 of the portable device 100 according to an embodiment. In this way, as the portable device 100 according to the present exemplary embodiment mounts respective NFC antennas proximate both the front surface and a rear surface, a recognition area of the NFC antenna is enlarged. (The rear surface of portable device 100 is the interior surface of rear case 20, not shown.) Thus when a user places either the rear surface of device 100 or the front surface of window 130 against or adjacent to an external device in order to near field communicate with the external device, reliable data transfer is achievable. This is in contrast to conventional portable devices which lack the front side NFC antenna, as explained in the background section above.

In the present embodiment, the first NFC antenna 151 is mounted in a BM area of the front case 10 (preferably, in between the BM area 132 of the window 130 and the peripheral surface of the front case 10). The first NFC antenna 151 may be formed as a loop antenna having at least one turn number.

The second NFC antenna 152 can be configured to include an outer edge loop 152a having at least one turn number and at least one inside loop 152b arranged to pass through a weak radio area generated by the outer edge loop 152a. Thereby, the inside loop 152b increases the magnetic field in the weak radio area, effectively eliminating any weak radio area. As an example configuration, the outer edge loop 152a is of a generally rectangular or oval shape and has an approximate overall width W1, and the inner loop 152b is also generally rectangular or oval shaped and has a width W2 in the same direction. W2 can be in the range of one quarter to three quarters of the value for W1. In the example illustrated, W2 is approximately one third to one half the dimension of W1. The example may be for a portable device 100 with a screen size larger than about five inches, such as a modern tablet PC or large smart phone. In any event, the shape and size of the inner loop 152b can be varied by a designer, preferably to achieve a result of eliminating a weak radio area (eliminating a "dead zone"). The elimination of the weak radio area preferably allows a user to laterally position the rear surface of portable device 100 anywhere in proximity to an external device (reader or tag device) receiving area for reliable data communication with the external device. Hence the user need not worry about the exact lateral position of the portable device 100 with respect to the external device, thereby enhancing user convenience.

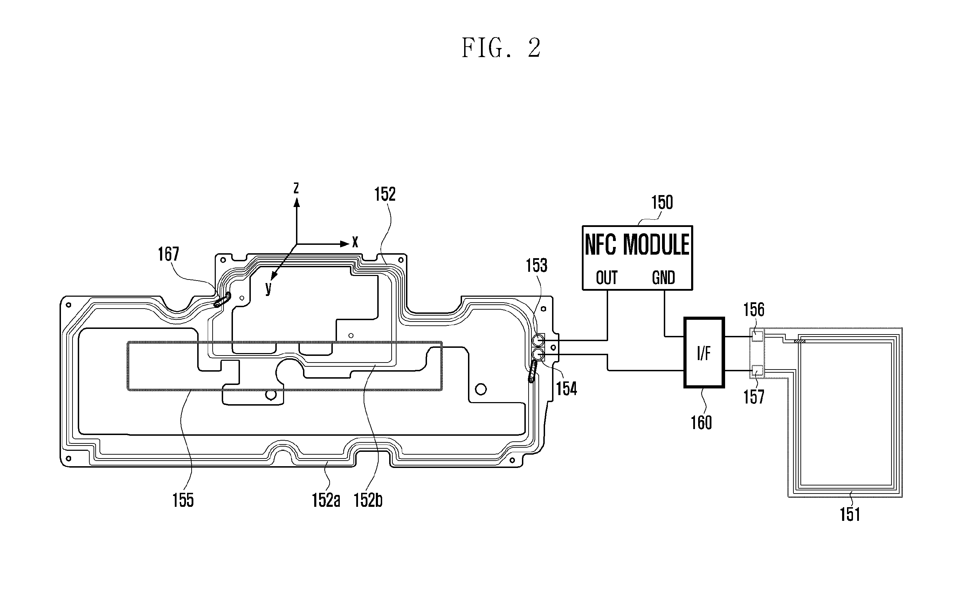

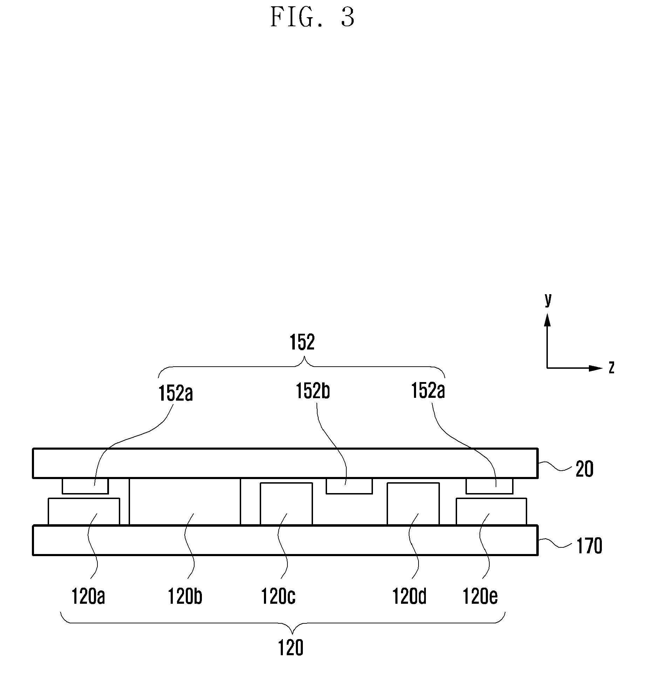

In the example of FIG. 1B (and FIG. 2 described below), outer edge loop 152a is formed with two loops, i.e., a turn number of two; however, it can be alternatively formed with only a single loop or with at least three loops. The second NFC antenna 152 is mountable between the rear case 20 of the portable device 100 and a printed circuit board (PCB) (e.g., PCB 170 of FIG. 3) in which a plurality of electronic components are mounted, or a battery (not shown). When the second NFC antenna 152 is mounted between the rear case 20 and the PCB, at least some portions of the outer edge loop 152a and the inside loop 152b of the second NFC antenna 152 can be mounted within a gap between the rear case 20 and electronic components having a relatively shallow height among a plurality of electronic components. This is described later with reference to FIG. 3. In this case, the first NFC antenna 151 and the second NFC antenna 152 are connected through an interface unit (I/F unit 160 of FIG. 2) and an NFC module (150 in FIG. 2) to form one continuous conductive path. This is described later with reference to FIG. 2.

The portable device 100 may be a tablet PC having a relatively large screen (e.g., 5 inches or more). FIG. 1A illustrates that the portable device 100 includes one first NFC antenna 151, but the present invention is not limited thereto. That is, in the portable device 100 according to another exemplary embodiment of the present invention, in order to enlarge an NFC recognition area on the front side, the first NFC antenna 151 may be mounted in at least two locations of the BM area 132 of the right side, the left side, the upper side, and the lower side of the front case 10.

FIG. 2 illustrates an example arrangement of an NFC antenna apparatus installed in the portable device 100 of FIGS. 1A and 1B. An NFC antenna apparatus according to an exemplary embodiment of the present invention includes the first NFC antenna 151, the second NFC antenna 152, an NFC module 150, and an interface (I/F) unit 160.

The first NFC antenna 151 is positioned at the front case 10 of the portable device 100. Specifically, the first NFC antenna 151 is positioned just beneath the BM area 132 of the window 130 (herein, BM area 132 is also called a BM area of the front case 10). First NFC antenna 151 can be configured with a single loop (turn number of one) as in a conventional general NFC antenna, or with two or more loops. FIG. 2 illustrates an example where the first NFC antenna 151 has the turn number of two times. In any event, as the first NFC antenna 151 is mounted in a BM area 132, the first NFC antenna 151 has a relatively small size (e.g., 80mm x 15mm). Further, the first NFC antenna 151 can be formed with only a single turn in each layer, i.e., it may be formed in a stacking antenna that forms each turn in a different layer. Designs with multiple turns in a single layer are also possible.

The second NFC antenna 152 is positioned at the rear case 20 of the portable device 100. The second NFC antenna 152 has a size larger than that of the first NFC antenna 151. For example, the second NFC antenna 152 may have a size of 120mm x 45mm and a turn number of two times to three times. Specifically, as shown in FIG. 2, the second NFC antenna 152 includes the outer edge loop 152a and the inside loop 152b. In this case, the inside loop 152b is arranged to be formed in a weak radio area 155 of the outer edge loop 152a (i.e., a weak radio area generated by the outer edge loop 152a if it were used without the inner loop 152b). For example, the inside loop 152b may intersect the weak radio area 155 of the outer edge loop 152a in a width direction, length direction, or diagonal direction. In this case, the inside loop 152b may be formed in one continuous conductive strip (line). Here, for convenience of description, the weak radio area 155 of FIG. 2 illustrates an area that would be a weak radio area if the inside loop 152b were not present. However, the second NFC antenna 152 according to the present exemplary embodiment has no weak radio area due to the inside loop 152b increasing the magnetic field strength in area 155. Due to a large size of the NFC antenna, when a magnetic field occurring through a loop of an NFC antenna is not generated in an entire area or even if a magnetic field occurring through a loop of an NFC antenna is present in an entire area, when intensity of a magnetic field is insufficient across the entire area, such a weak radio area 155 occurs. That is, as a loop size of the NFC antenna increases, weak radio areas such as area 155 become more prevalent or increase in size.

The outer edge loop 152a and the inside loop 152b are preferably connected in series, rather than in a parallel structure. That is, the outer edge loop 152a and the inside loop 152b are formed in one continuous conductive line, as shown in FIG. 2. An overpass or underpass connection 167 may be used to achieve this series connection. The second NFC antenna 152 may be printed as conductive lines directly on the rear case 20, or placed thereon. In FIG. 2, the second NFC antenna 152 is shown in relation to a PCB 170 disposed between the rear case 20 and the front window 130.

The NFC module 150 transmits and receives an NFC signal through at least one of the first NFC antenna 151 and the second NFC antenna 152. The NFC module 150 transmits or receives a wireless signal from a touched or proximally located external reader or tag. The external reader or tag may be approached within a predetermined distance (e.g., 1-2 cm) of portable device 100, and the NFC module 150 may operate as a tag or a reader. When operating as a tag, NFC module 150 transmits a response signal thereof to an external reader.

Alternatively, when the portable device 100 operates as a reader, the NFC module 150 transmits a wireless signal to a touched external tag or an external tag approached within a predetermined distance and receives a response signal thereof from the external tag.

The interface unit 160 may be formed with various connectors and connects the first NFC antenna 151, second NFC antenna 152, and NFC module 150. Specifically, the interface unit 160 connects a grounded portion 156 of the first NFC antenna 151 and a ground GND terminal of the NFC module 150 and connects a grounded portion 154 of the second NFC antenna 152 and a power feed point 157 of the first NFC antenna 151. In this case, an output terminal OUT of the NFC module 150 is connected to a power feed point 153 of the second NFC antenna 152. That is, the first NFC antenna 151 and the second NFC antenna 152 are connected to form one conductive path, thereby being part of a single conductive path from the GND and OUT connection terminals of the NFC module 150. The first and second antennas 151, 152 also thereby form a series connection of loops.

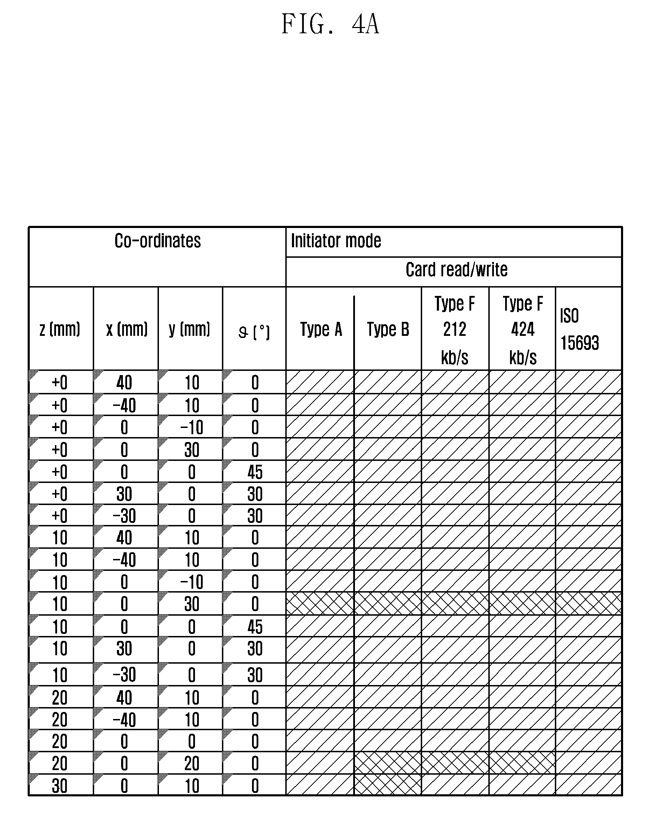

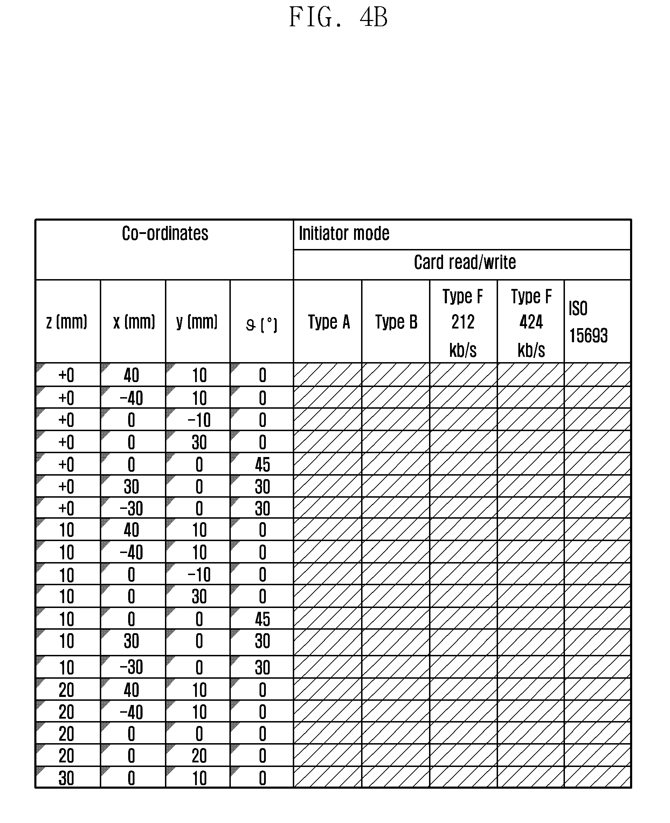

In the foregoing description, an NFC antenna apparatus has been described. Hereinafter, an effect of an embodiment of the present invention is described in reference to the tables of FIGS. 4A and 4B, through a tag recognition experimental result of a conventional NFC antenna that does not include an inside loop and the second NFC antenna 152 of the present exemplary embodiment including an inside loop. A measurement position coordinate of FIGS. 4A and 4B uses a position at which an x-y-z coordinate system of FIG. 2 is shown as a reference point.

FIG. 4A illustrates a near field measurement result of a conventional NFC antenna that does not include an inside loop. FIG. 4B is a table illustrating a near field measurement result of the NFC antenna 152 according to the exemplary embodiment, which has an outer edge loop and an inside loop. Improvement in a weak radio area is evident in the table of FIG. 4B. For convenience of description, FIGS. 4A and 4B show measurement results that either meet or exceed a threshold requirement. That is, in FIGS. 4A and 4B, an area representing Card read/write results displayed without an "X" indicate an area meeting a threshold requirement, i.e., no weak radio area, and an area displayed with "X's" indicates an area failing to meet a threshold requirement, i.e., a weak radio area.

In FIG. 4A, it can be seen that a conventional NFC antenna that does not include the inside loop has a plurality of weak radio areas. Specifically, it can be seen that a weak radio area exists at a position (e.g., 155 of FIG. 2) corresponding to the X's.

However, in FIG. 4B, it can be seen that the second NFC antenna 152 including the inside loop 152b according to the present exemplary embodiment has no weak radio area. That is, in the second NFC antenna 152 according to the present exemplary embodiment, it can be seen that a weak radio area occurring due to size increase of the outer edge loop 152a was removed through the provision of the inside loop 152b.

FIGS. 4A and 4B are or course an example, and the present invention is not limited thereto. That is, a weak radio area of FIG. 4A may be changed according to a size, form, and mounted position of an NFC antenna.

Further, FIG. 2 illustrates that the inside loop 152b is a single turn loop, but the present invention is not limited thereto. That is, a plurality of inside loops 152b may be formed.

FIG. 3 is a cross-sectional view illustrating a mounting example of a second NFC antenna installed in the portable device 100 of FIGS. 1A and 1B. In the example of FIG. 3, the second NFC antenna 152 according to the present exemplary embodiment is mounted between the rear case 20 and a PCB 170. In this case, the outer edge loop 152a and the inside loop 152b of the second NFC antenna 152 are positioned within a gap between the PCB 170 and the rear case 20. Specifically, the outer edge loop 152a and the inside loop 152b of the second NFC antenna 152 may be mounted to the rear case 20 to be positioned at an upper end portion of electronic components (where upper end portion is with respect to the connection at the base of the PCB 170) e.g., 120a and 120e having a relatively shallow height among a plurality of electronic components 120, or to be positioned at space occurring due to separation of electronic components (e.g., 120c and 120d), as shown in FIG. 3. This is to minimize a thickness of the portable device 100 based on an electronic component (e.g., 120b) having a highest height.

When a problem of thickness increase of the portable device 100 is not considered, a mounting position in the case of the second NFC antenna 152 may be at any location of the rear case 20. For example, the second NFC antenna 152 may be mounted on the rear case 20 to a position at an upper end portion of a battery (not shown).

As described above, in an NFC antenna apparatus and a portable device having the same according to the present invention, by installing an NFC antenna at a front side (just beneath the front surface of the portable device, i.e., proximate the front surface) and at a rear side (i.e., proximate the rear surface of the portable device), an operation range of the NFC antenna can increase. Further, by effectively removing a weak radio area of a magnetic field which is typically present in larger loop-type NFC antennas of larger portable devices, recognition efficiency can increase.

Accordingly, the above exemplary embodiments can alleviate or eliminate both the prior art problems of front surface touch / proximity data communication errors, and weak radio area errors for rear surface touch / proximity communication (the latter prevalent in relatively larger portable devices). However, simpler configurations which solve only one of the above problems are also within the scope of the present invention. That is, a portable device can be designed with just a single NFC antenna 152 with outer and inner loops 152a, 152b, but without the NFC antenna 151, to thereby address just the rear surface communication problem. As another alternative, a portable device can be provided with both NFC antennas 151 and 152 to address the front surface communication problem, but antenna 152 could be designed with just the outer loop 152a without the inner loop 152b if the rear surface communication problem is not a concern for that particular device. Although exemplary embodiments of the present invention have been described in detail hereinabove, it should be clearly understood that many variations and modifications of the basic inventive concepts herein described, which may appear to those skilled in the art, will still fall within the spirit and scope of the exemplary embodiments of the present invention as defined in the appended claims.

## Claims

1. A portable device comprising:
a first near field communication (NFC) antenna proximate a front surface of the portable device; and
a second NFC antenna proximate a rear surface of the portable device.

2. The portable device of claim 1, wherein the first NFC antenna is mounted in a black mark area of a front side of the portable device.

3. The portable device of claim 1, wherein the second NFC antenna comprises at least one inside loop that passes through an outer edge loop and a weak radio area generated by the outer edge loop.

4. The portable device of claim 3, wherein the second NFC antenna is mounted between a rear case of the portable device and a printed circuit board (PCB) in which a plurality of electronic components are mounted.

5. The portable device of claim 4, wherein at least a portion of at least one of the outer edge loop and the inside loop is mounted on the rear case at a position within a gap between the rear case and at least one component of the PCB having a relatively shallow height among the plurality of electronic components.

6. The portable device of claim 4, wherein at least a portion of at least one of the outer edge loop and the inside loop is mounted on the rear case at a position within a gap occurring between the rear case and the PCB due to separation of electronic components.

7. The portable device of claim 1, wherein the first NFC antenna is mounted in at least one location of a black mark area of a right side, left side, upper side, and lower side of a front case of the portable device.

8. The portable device of claim 1, further comprising an NFC module for transmitting and receiving an NFC signal to and from at least one of the first NFC antenna and the second NFC antenna.

9. The portable device of claim 8, further comprising an interface unit for connecting the first NFC antenna, the second NFC antenna, and the NFC module,
wherein the first NFC antenna and the second NFC antenna are part of a continuous conductive path from connection points on the NFC module.

10. A near field communication (NFC) antenna apparatus mounted in a portable device, the NFC antenna apparatus comprising:
a first NFC antenna proximate a front surface of the portable device;
a second NFC antenna proximate a rear surface of the portable device; and
an interface unit to connect the first and second NFC antennas.

11. The NFC antenna apparatus of claim 10, further comprising an NFC module for transmitting and receiving an NFC signal to and from at least one of the first NFC antenna and the second NFC antenna.

12. The NFC antenna apparatus of claim 11, wherein the first NFC antenna and the second NFC antenna are part of a continuous conductive path from connection points on the NFC module.

13. The NFC antenna apparatus of claim 10, wherein the second NFC antenna comprises at least one inside loop that passes through an outer edge loop and a weak radio area generated by the outer edge loop.

14. A portable device comprising:
a near field communication (NFC) antenna proximate a rear surface of the portable device, including at least one outer loop and at least one inside loop that passes through the outer loop and a weak radio area generated by the outer loop.

15. The portable device of claim 14, further comprising a rear case and a printed circuit board (PCB) in which a plurality of electronic components are mounted,
wherein the NFC antenna is mounted between the rear case and the PCB.
